# EUROPEAN PATENT APPLICATION

(11) **EP 2 871 570 A2**
(43) Date of publication of application: **13.05.2015**
(21) Application number: 14166088.6
(22) Date of filing: 25.04.2014
(51) Int. Cl.: G06F 3/0488

(54) **Electronic apparatus, method and storage medium**

(30) Priority: 07.11.2013 JP 2013231315
(71) Applicant: Kabushiki Kaisha Toshiba, Tokyo 105-8001 (JP)
(72) Inventor: Ohmori, Shigefumi, Tokyo, 105-8001 (JP); Nagata, Junichi, Tokyo, 105-8001 (JP)
(74) Representative: Henkel, Breuer & Partner

(57) **Abstract**

According to one embodiment, an electronic apparatus includes a receiver (302) and a display controller (308). The receiver (302) is configured to receive information of a handwritten document including a hand-written table, the hand-written table including a plurality of cells, a first cell including at least one first object. The display controller (308) is configured to display a cell value of a table using a recognition result of one first object if an area of the first cell includes one first object, and to display a recognition result of at least one first object as an object different from a table if an area of the first cell includes at least two first objects.

## Description

Embodiments described herein relate generally to a technique of shaping a handwritten document.

Recently, various electronic apparatuses such as tablet computers, personal digital assistants (PDAs) and smartphones including a touchscreen display and allowing handwritten input have been developed.

Such electronic apparatuses can shape characters or charts included in a handwritten page, and export the handwritten page in various formats (for example, PowerPoint format or Word format). In the prior art, however, if a hand-drafted table including both characters and figures is shaped and then further shaped in an editable format, a problem arises in that the layout after shaping greatly differs from that before shaping, which a user will find awkward.

A general architecture that implements the various features of the embodiments will now be described with reference to the drawings. The drawings and the associated descriptions are provided to illustrate the embodiments and not to limit the scope of the invention.
FIG. 1 is a perspective view illustrating an example of an appearance of an electronic apparatus according to an embodiment.
FIG. 2 illustrates a cooperative operation between the electronic apparatus of the embodiment and external devices.
FIG. 3 illustrates en example of a document handwritten on a touchscreen display of the electronic apparatus of the embodiment.
FIG. 4 is a figure illustrating time series information which is stored in a storage medium by the electronic apparatus of the embodiment and corresponds to the handwritten document of FIG. 3.
FIG. 5 is a block diagram illustrating a system configuration of the electronic apparatus of the embodiment.
FIG. 6 illustrates a structural element of a screen displayed on the touchscreen display of the electronic apparatus of the embodiment.
FIG. 7 illustrates a desktop screen displayed by a handwritten note application program in the electronic apparatus of the embodiment.
FIG. 8 illustrates a note preview screen displayed by the handwritten note application program in the electronic apparatus of the embodiment.
FIG. 9 illustrates a page editing screen displayed by the handwritten note application program in the electronic apparatus of the embodiment.
FIG. 10 illustrates a group of software buttons on the page editing screen displayed by the handwritten note application program in the electronic apparatus of the embodiment.
FIG. 11 illustrates another group of software buttons on the page editing screen displayed by the handwritten note application program in the electronic apparatus of the embodiment.
FIG. 12 illustrates a screen which is displayed by the handwritten note application program in the electronic apparatus of the embodiment, and on which a handwritten page on the page editing screen in FIG. 9 is shaped and displayed.
FIG. 13 is a block diagram illustrating an example of a function configuration of a handwritten note application in the electronic apparatus of the embodiment.
FIG. 14 is a flowchart illustrating an example of procedures of table shaping processing performed by the handwritten note application program in the electronic apparatus of the embodiment.
FIG. 15 illustrates another page editing screen displayed by the handwritten note application program in the electronic apparatus of the embodiment.
FIG. 16 illustrates a screen after normal table shaping processing is performed on the handwritten page on the page editing screen of FIG. 15.
FIG. 17 illustrates a screen after the table shaping processing is performed on the handwritten page on the page editing screen of FIG. 15 by the handwritten note application program in the electronic apparatus of the embodiment.

Various embodiments will be described hereinafter with reference to the accompanying drawings.

In general, according to one embodiment, an electronic apparatus includes a receiver and a display controller. The receiver is configured to receive information of a handwritten document including a hand-written table, the hand-written table including a plurality of cells, a first cell including at least one first object. The display controller is configured to display a cell value of a table using a recognition result of one first object if an area of the first cell includes one first object, and to display a recognition result of at least one first object as an object different from a table if an area of the first cell includes at least two first object.

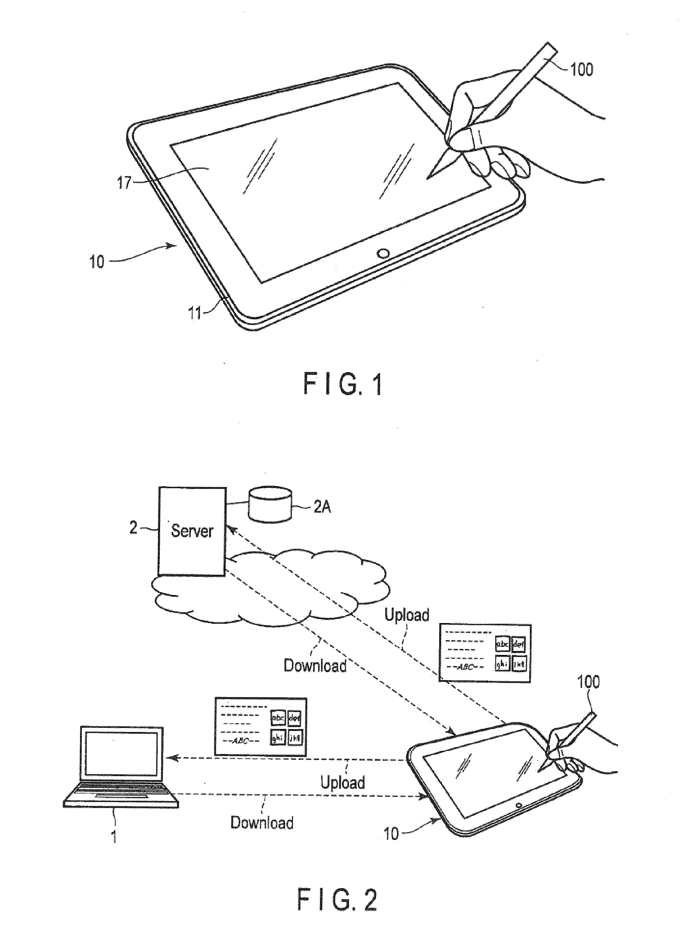

FIG. 1 is a perspective view illustrating an appearance of an electronic apparatus according to an embodiment. The electronic apparatus is, for example, a stylus-based portable electronic apparatus enabling handwritten input using a stylus or a finger. The electronic apparatus may be realized as a tablet computer, a notebook computer, a smartphone, a PDA, etc. In this description, suppose the electronic apparatus is realized as a tablet computer 10. The tablet computer 10 is a portable electronic apparatus also called a tablet or a slate computer, and includes a main body 11 and a touchscreen display 17, as shown in FIG. 1. The touchscreen display 17 is attached to an upper surface of the main body 11 in piles.

The main body 11 includes a thin box housing. A flat panel display and a sensor configured to detect a contact position of a stylus or a finger on the screen of the flat panel display are mounted on the touchscreen display 17. The flat panel display may be, for example, a liquid crystal display (LCD). As the sensor, for example, a capacitive touchpanel or an electromagnetic induction system digitizer may be used. Suppose both of two kinds of sensors, that is, the digitizer and the touchpanel are mounted on the touchscreen display 17.

The touchscreen display 17 may detect not only a touch operation on a screen by use of a finger but that on the screen by use of a stylus 100. The stylus 100 may be, for example, a digitizer stylus (electromagnetic induction stylus). A user may perform a handwritten input operation on the touchscreen display 17 using the stylus 100. A path based on movement of the stylus 100 on a screen, that is, a stroke handwritten in the handwritten input operation (path of a hand-written stroke) is written in real time, and then a plurality of strokes input by hand are displayed on the screen during the handwritten input operation. The path of movement of the stylus 100 when the stylus 100 is in contact with the screen corresponds to a stroke. A set of multiple strokes corresponding to a handwritten character, a hand-written figure, a hand-written table, etc., constitutes a handwritten document.

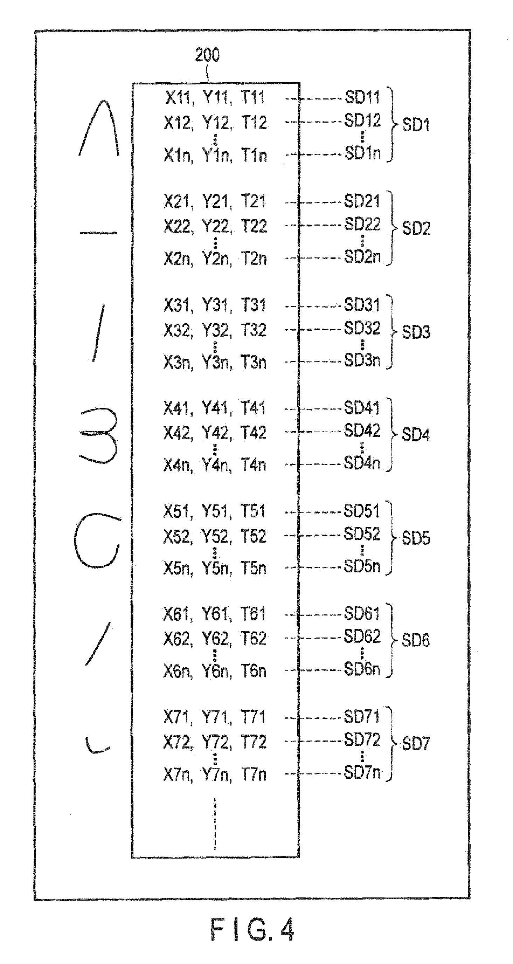

In this embodiment, the handwritten document is stored in a storage medium not as image data but as time series information (handwritten document data) indicating the sequential relationship between a coordinate string of a path of each stroke and a stroke. Although the time series information will be described later in detail with reference to FIG. 4, it indicates the hand-written order of the plurality of strokes and includes a plurality of sets of stroke data corresponding to the plurality of strokes. In other words, the time series information means a set of time series stroke data items corresponding to the plurality of strokes. Each set of stroke data items corresponds to a stroke and includes a coordinate data series (time series coordinates) corresponding to each point on the path of the stroke. The sequential order of the sets of stroke data items corresponds to the hand-written order of the strokes.

The tablet computer 10 may read any existing time series information from a storage medium, and display the handwritten document corresponding to the time series information, that is, the plurality of strokes indicated by the time series information on a screen. The plurality of strokes indicated by the time series information are also the plurality of strokes input by hand.

Furthermore, the tablet computer 10 of this embodiment also includes a touch input mode for performing the handwritten input operation using a finger instead of the stylus 100. If the touch input mode is enabled, a user may perform the handwritten input operation on the touchscreen display 17 using a finger. A path based on movement of the finger on the screen, that is, a stroke written in the handwritten input operation (path of the hand-written stroke) is written in real time, and then the plurality of strokes input by hand are displayed on the screen during the handwritten input operation.

Furthermore, the tablet computer 10 includes an editing function. Using the editing function, any handwritten portion in a handwritten document being displayed (a handwritten character, a handwritten mark, a hand-written figure, a hand-drafted table, etc.) may be deleted or moved, the handwritten portion being selected by a range selection tool in accordance with a user's editing operation using an eraser tool, a range selection tool and other various tools. Furthermore, any handwritten portion selected by the range selection tool in the handwritten document may be specified as a search key for searching the handwritten document. Also, recognition processing such as handwritten character recognition, hand-written figure recognition and hand-drafted table recognition may be performed on any handwritten portion selected by the range selection tool in the handwritten document.

In this embodiment, the handwritten document may be managed as one or more pages. In this case, a group of time series information fitting onto a screen may be stored as a page by partitioning the time series information (handwritten document data) by area fitting onto the screen. Alternatively, the size of the page may be made variable. In this case, since the size of the page may be enlarged to include an area greater than that of the screen, the handwritten document including an area greater than that of the screen may be handled as a page. If a whole page cannot be displayed on a display at a time, the page may be reduced, or a portion to be displayed on the page may be moved by scrolling vertically or horizontally.

FIG. 2 illustrates an example of a cooperative operation between the tablet computer 10 and external devices. The tablet computer 10 may cooperate with a personal computer 1 or a cloud-based computer. That is, the tablet computer 10 includes a wireless communication device such as a wireless LAN, and may perform wireless communication with the personal computer 1. Furthermore, the tablet computer 10 may perform communication with a server 2 on the Internet. The server 2 may be a server configured to execute an online storage service or other various cloud computing services.

The personal computer 1 includes a storage device such as a hard disc drive (HDD). The tablet computer 10 may transmit the time series information (handwritten document data) to the personal computer 1 over a network, and store it on the HDD of the personal computer 1 (upload). To ensure secure communication between the tablet computer 10 and the personal computer 1, the personal computer 1 may authenticate the tablet computer 10 on initializing communication. In this case, a dialogue for prompting a user to enter an ID or a password may be displayed on the screen of the tablet computer 10, and an ID, etc., of the tablet computer 10 may be automatically transmitted from the tablet computer 10 to the personal computer 1.

This enables the tablet computer 10 to handle a large amount of time series information or large-capacity time series information even in the tablet computer 10 including small-capacity storage.

Furthermore, the tablet computer 10 may read at least one piece of any time series information stored on an HDD of the personal computer 1 (download) and display a stroke indicated by the read time series information on a screen of a display 17 of the tablet computer 10. In this case, a gallery of thumbnails obtained by reducing a page of each of the plurality of pieces of time series information may be displayed on the screen of the display 17, and a page selected from the thumbnails may be displayed on the screen of the display 17 in a normal size.

Furthermore, a communication destination of the tablet computer 10 may be not only the personal computer 1 but the server 2 in the cloud configured to provide a storage service, etc., as described above. The tablet computer 10 may transmit the time series information (handwritten document data) to the server 2 over the network, and store it in a storage device 2A of the server 2 (upload). Furthermore, the tablet computer 10 may read any time series information stored in the storage device 2A of the server 2 (download) and display the path of each stroke indicated by the time series information on the screen of the display 17 of the tablet computer 10.

As described above, in this embodiment, the time series information may be stored in the storage device in the tablet computer 10, the storage device in the personal computer 1 or the storage device 2A in the server 2.

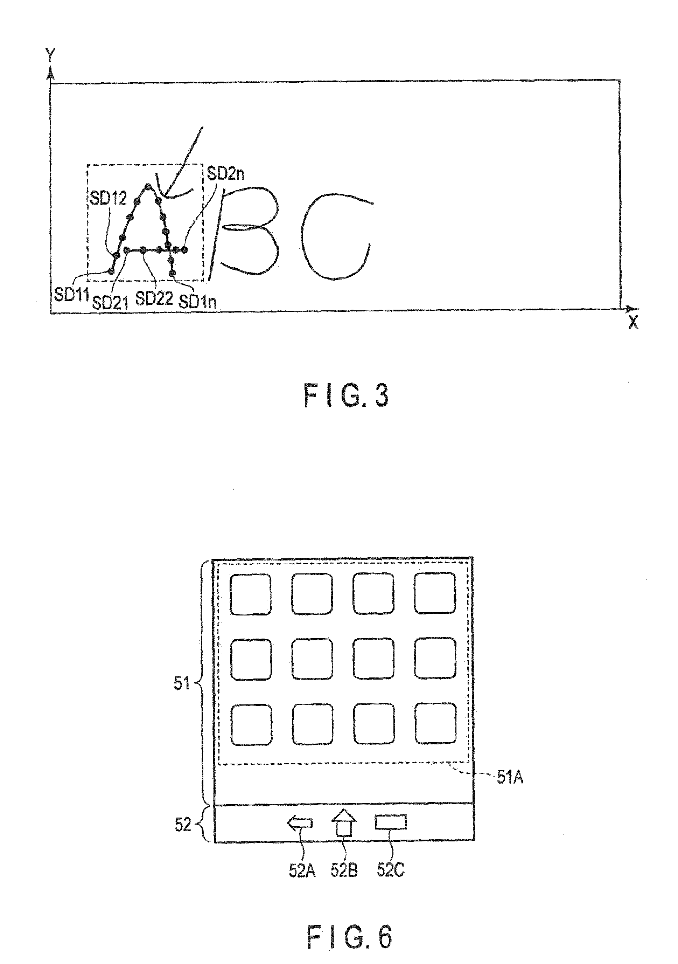

Next, the relationship between a stroke handwritten by a user (a character, a figure, a table, etc.) and the time series information will be described with reference to FIGS. 3 and 4. FIG. 3 illustrates an example of a handwritten document (handwritten character string) written on the touchscreen display 17 using the stylus 100, etc.

In the handwritten document, a character or a figure is initially input by hand, and then another character, figure or the like is often input by hand over the initial character or figure. FIG. 3 illustrates a case where the handwritten character string "ABC" is input as "A," "B" and "C" in that order, and then a hand-written arrow is input in the immediate vicinity of the "A."

The handwritten character "A" is composed of two strokes (a "Λ"-form path and a "-"-form path) written by hand with the stylus 100, etc., that is, two paths. The "Λ"-form path of the stylus 100 which is written first is sampled in real time, for example, at regular time intervals, and as a result, time series coordinates SD11, SD12, . . . , SD1n of the "Λ" stroke may be obtained. Similarly, the "-"-form path of the stylus 100 which is written next is also sampled in real time at regular time intervals, and as a result, time series coordinates SD21, SD22, . . . , SD2n of the "-" stroke may be obtained.

The handwritten character "B" is composed by two strokes written by hand with the stylus 100, etc., that is, two paths. The handwritten character "C" is composed of a stroke written by hand with the stylus 100, etc., that is, a single path. The hand-written arrow is composed of two strokes written by hand with the stylus 100, etc., that is, two paths.

FIG. 4 illustrates time series information 200 corresponding to the handwritten document shown in FIG. 3. The time series information includes a plurality of sets of stroke data SD1, SD2, . . . , SD7. The sets of stroke data SD1, SD2, ... , SD7 are arranged in the time series information 200 in time series in the order in which the strokes are written.

In the time series information 200, the first two sets of stroke data SD1 and SD2 indicate the two strokes of the handwritten character "A." The third and fourth sets of stroke data SD3 and SD4 indicate the two strokes forming the handwritten character "B." The fifth set of stroke data SD5 indicates the stroke forming the handwritten character "C." The sixth and seventh sets of stroke data SD6 and SD7 indicate the two strokes forming the hand-written arrow.

Each set of stroke data includes a coordinate data series (time series coordinates) corresponding to a stroke, that is, a plurality of coordinates each corresponding to one of a plurality of points on the path of a stroke. In each set of stroke data, a plurality of coordinates are arranged in time series in the order in which the strokes are written. Regarding, for example, the handwritten character "A," the set of stroke data SD1 includes a coordinate data series (time series coordinates) each corresponding to a point on the path of the "Λ" stroke of the handwritten character "A," that is, n groups of coordinate data SD11, SD12, . . . , SD1n. The set of stroke data SD2 includes a coordinate data series each corresponding to a point on the path of the "-" stroke of the handwritten character "A," that is, n sets of coordinate data SD21, SD22, . . . , SD2n. It should be noted that the number of sets of coordinate data may be different for each set of stroke data.

Each piece of coordinate data indicates an X-coordinate and a Y-coordinate corresponding to a point on a corresponding path. For example, coordinate data SD11 represents the X coordinate (X11) and Y-coordinate (Y11) at the starting point of the "Λ" stroke. SD1n represents the X-coordinate (X1n) and Y-coordinate (Y1n) at the end point of the "Λ" stroke.

Furthermore, each piece of coordinate data may include time stamp information T corresponding to a point in time when the point corresponding to the coordinate is handwritten. The point in time of handwriting may be an absolute time (for example, year, month, day, hour, minute and second) or a relative time which is based upon a certain point in time. For example, an absolute time (for example, year, month, day, hour, minute and second) when a stroke is written first may be added to each piece of stroke data as time stamp information. Furthermore, a relative time indicating a difference from an absolute time may be added to each piece of coordinate data in the stroke data as time stamp information T.

As described above, a time relationship between strokes may be accurately expressed using the time series information in which the time stamp information T is added to each piece of coordinate data.

Furthermore, information (Z) indicating writing pressure may be added to each piece of coordinate data.

The time series information 200 including a structure as described with reference to FIG. 4 may express not only handwritten script of each stroke but the time relationship between the strokes. Thus, the handwritten character "A" and the top of the hand-written arrow can be handled as a different character or figure using the time series information 200, even if the top of the hand-written arrow overlaps the handwritten character "A" or is adjacent to it, as shown in FIG. 3.

Furthermore, in this embodiment, the handwritten document data is stored not as an image or a character recognition result but as the time series information 200 constituted from a set of time-series stroke data as described above. Thus, the handwritten character can be handled without depending on a language of the handwritten character. Thus, the structure of the time series information 200 of this embodiment can be commonly used in various countries in the world in which different languages are used.

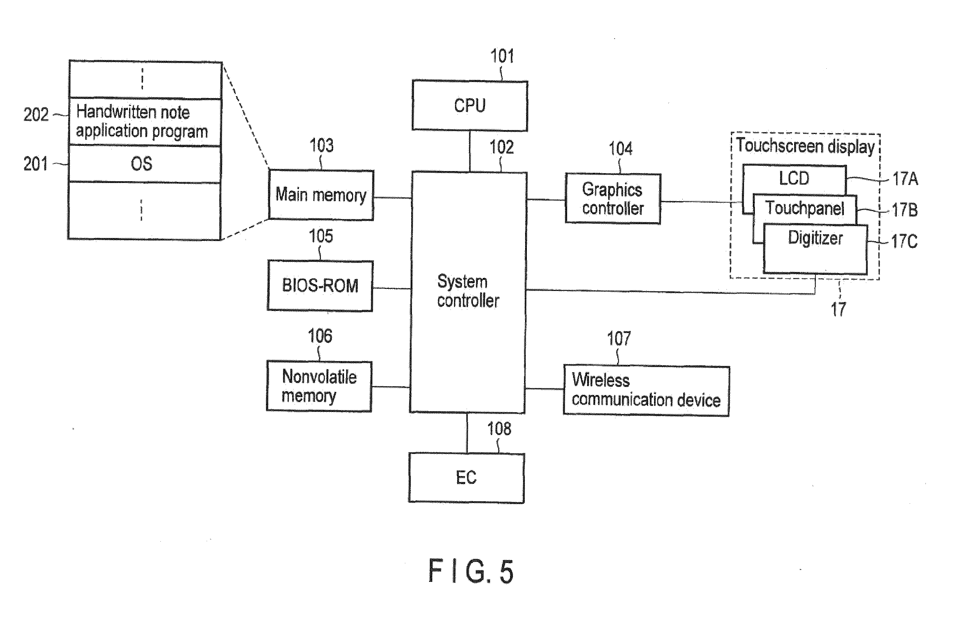

FIG. 5 illustrates a system configuration of the tablet computer 10.

As indicated in FIG. 5, the tablet computer 10 includes a CPU 101, a system controller 102, a main memory 103, a graphics controller 104, a BIOS-ROM 105, a nonvolatile memory 106, a wireless communication device 107, an embedded controller (EC) 108, etc.

The CPU 101 is a processor configured to control an operation of various modules in the tablet computer 10. The CPU 101 executes various types of software loaded from the nonvolatile memory 106 which is a storage device to the main memory 103. An operating system (OS) 201 and various application programs are included in the software. A handwritten note application program 202 is included in the application programs. The handwritten note application program 202 includes a function of creating and displaying the handwritten document data, a function of editing the handwritten document data, and a handwritten document search function of searching the handwritten document data including a desired handwritten portion or a desired handwritten portion in some handwritten document data.

Also, the CPU 101 executes a basic input/output system (BIOS) stored in the BIOS-ROM 105. The BIOS is a program for hardware control.

The system controller 102 is a device configured to connect between a local bus of the CPU 101 and various components. A memory controller configured to perform access control on the main memory 103 is also mounted in the system controller 102. Also, the system controller 102 includes a function of performing communication with the graphics controller 104 using a serial bus conforming to the PCI EXPRESS standard.

The graphics controller 104 is a display controller configured to control an LCD 17A used as a display monitor of the tablet computer 10. A display signal generated by the graphics controller 104 is transmitted to the LCD 17A. The LCD 17A displays a screen image based on the display signal. A touchpanel 17B, the LCD 17A and a digitizer 17C are overlapped. The touchpanel 17B is a capacitive pointing device configured to perform input on a screen of the LCD 17A. A contact position of a finger on a screen and movement of the contact position are detected by the touchpanel 17B. The digitizer 17C is an electromagnetic induction-style pointing device configured to perform input on a screen of the LCD 17A. A contact position of the stylus (digitizer stylus) 100 on a screen and movement of the contact position are detected by the digitizer 17C.

The wireless communication device 107 is a device configured to perform wireless communication such as a wireless LAN and 3G mobile communication. An EC 108 is a one-chip micro computer including an embedded controller for power management. The EC 108 includes a function of powering on or off the tablet computer 10 in accordance with the operation of a power button by a user.

FIG. 6 illustrates a structural element of a screen displayed on the touchscreen display 17.

The screen includes a display area 51 (also called a content area) and a bar 52 (also called a navigation bar) below the display area 51. The display area 51 is an area for displaying contents. Contents of an application program in an active state are displayed in the display area 51. FIG. 6 illustrates a case where a launcher program is in the active state. In this case, a plurality of icons 51A corresponding to a plurality of application programs are displayed in the display area 51 by the launcher program.

It should be noted that an application program being active means that the application program is shifted to a foreground. In other words, it means that the application program is started and focused.

The bar area 52 is an area for displaying at least one software button (also called a software key) of the OS 201. A predetermined function is assigned to each software button. When a software button is tapped by a finger or the stylus 100, a function assigned to the software button is carried out by the OS 201. For example, in the Android (registered trademark) environment, a return button 52A, a home button 52B and a recent application button 52C are displayed on the bar 52, as shown in FIG. 6. The software buttons are displayed at a default display position on the bar 52.

Next, examples of some typical screens indicated to a user by the handwritten note application program 202 will be described.

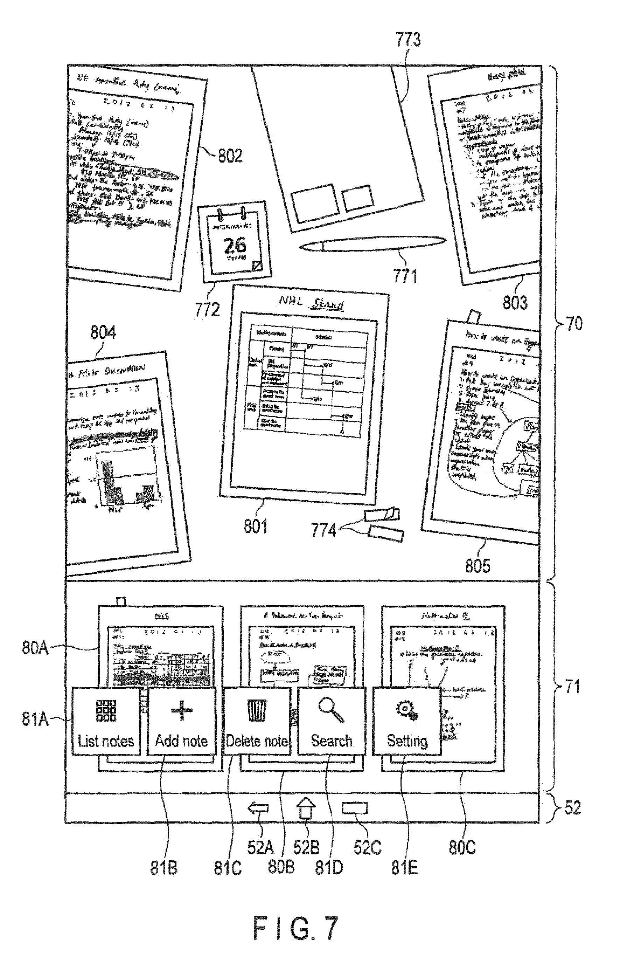

FIG. 7 illustrates a desktop screen displayed by the handwritten note application program 202. The desktop screen is a basic screen for handling a plurality of pieces of handwritten document data. The handwritten document data is hereinafter referred to as a handwritten note.

The desktop screen includes a desktop screen area 70 and a drawer screen area 71. The desktop screen area 70 is a temporary area for displaying a plurality of note icons 801 to 805 corresponding to a plurality of handwritten notes in a working state. Each of the note icons 801 to 805 displays a thumbnail of a page in a corresponding handwritten note. The desktop screen area 70 further displays a stylus icon 771, a calendar icon 772, a scrap note (gallery) icon 773 and a tag (label) icon 774.

The stylus icon 771 is a graphical user interface (GUI) for switching a display screen from a desktop screen to a page editing screen. The calendar icon 772 is an icon for indicating a current date. The scrap note icon 773 is a GUI for browsing data (called scrap data or gallery data) captured from another application program or an external file. The tag icon 774 is a GUI for attaching a label (tag) on any page in any handwritten note.

The drawer screen area 71 is a display area for browsing a storage area for storing all of created handwritten notes. The drawer screen area 71 displays the note icons 80A, 80B and 80C corresponding to some handwritten notes in all the handwritten notes. Each of the note icons 80A, 80B and 80C displays a thumbnail on a page in a corresponding handwritten note. The handwritten note application program 202 may detect a gesture (for example, swipe gesture) performed by a user in the drawer screen area 71 using the stylus 100 or a finger. The handwritten note application program 202 scrolls a screen image in the drawer screen area 71 leftward or rightward in response to detection of the gesture (for example, swipe gesture). This allows a note icon corresponding to any handwritten note to be displayed in the drawer screen area 71.

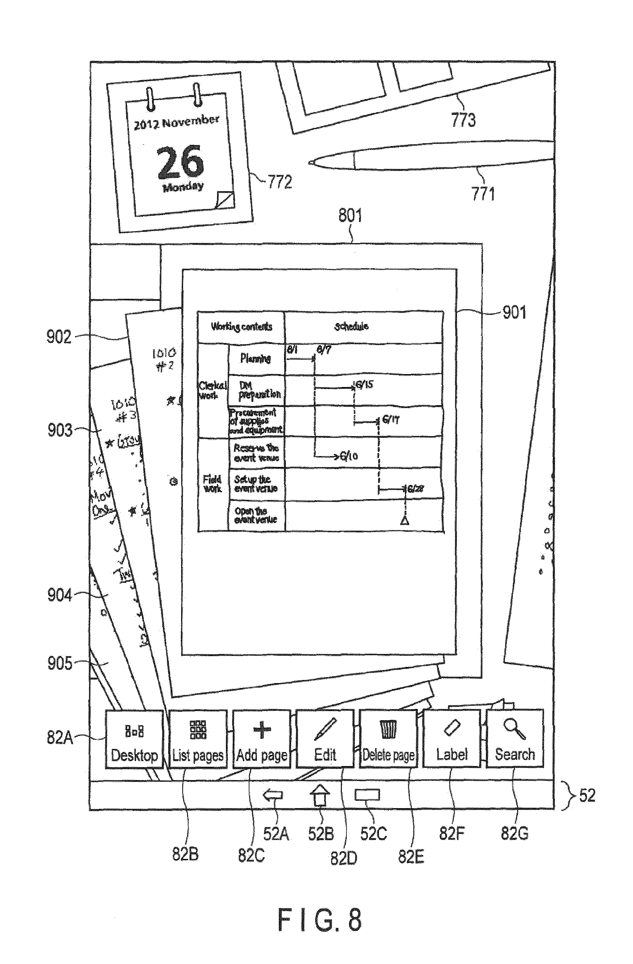

Furthermore, the handwritten note application program 202 may detect a gesture (for example, tap gesture) performed by a user on the note icon of the drawer screen area 71 using the stylus 100 or a finger. The handwritten note application program 202 moves a note icon to a central portion of the desktop screen area 70 in response to detection of a gesture (for example, tap gesture) on the note icon in the drawer screen area 71. Then, the handwritten note application program 202 selects a handwritten note corresponding to the note icon, and displays the note preview screen shown in FIG. 8 instead of a desktop screen. The note preview screen of FIG. 8 is a screen configured to browse any page in the selected handwritten note.

Furthermore, the handwritten note application program 202 may detect a gesture (for example, tap gesture) performed by a user in the desktop screen area 70 using the stylus 100 or a finger. The handwritten note application program 202 selects a handwritten note corresponding to a note icon located in a central portion in response to detection of the gesture (for example, tap gesture) on the note icon located in the central portion of the desktop screen area 70, and displays the note preview screen shown in FIG. 8 instead of a desktop screen.

Furthermore, a menu may be displayed on the desktop screen. This menu includes a list note button 81A, a note addition button 81B, a note deletion button 81C, a search button 81D and a setting button 81E. The list note button 81A is a button for displaying a list of the handwritten note. The note addition button 81B is a button for creating (adding) a new handwritten note. The note deletion button 81C is a button for deleting the handwritten note. The search button 81D is a button for opening a search screen (search dialogue). The setting button 81E is a button for opening a setting screen.

Also, the return button 52A, the home button 52B and the recent application button 52C are displayed on the bar 52.

FIG. 8 illustrates the above-described note preview screen.

The note preview screen is a screen configured to browse any page in a selected handwritten note. Suppose a handwritten note corresponding to a note icon 801 is selected. In this case, the handwritten note application program 202 displays a plurality of pages 901 to 905 included in the handwritten note with the pages 901 to 905 overlapped such that at least part of each of the pages 901 to 905 may be viewed.

The stylus icon 771, the calendar icon 772, the scrap note icon 773 and the tag icon 774 are further displayed on the note preview screen.

A menu may be further displayed on the note preview screen. The menu includes a desktop button 82A, a list page button 82B, a page addition button 82C, an edit button 82D, a page deletion button 82E, a label button 82F and a search button 82G. The desktop button 82A is a button for displaying the desktop screen. The list page button 82B is a button for displaying a list of pages in the currently-selected handwritten note. The page addition button 82C is a button for creating (adding) a new page. The edit button 82D is a button for displaying a page editing screen. The page deletion button 82E is a button for deleting a page. The label button 82F is a button for displaying a list of kinds of usable labels. The search button 82G is a button for displaying the search screen.

In the same manner as the desktop screen of FIG. 7, the return button 52A, the home button 52B and the recent application button 52C are displayed on the bar 52.

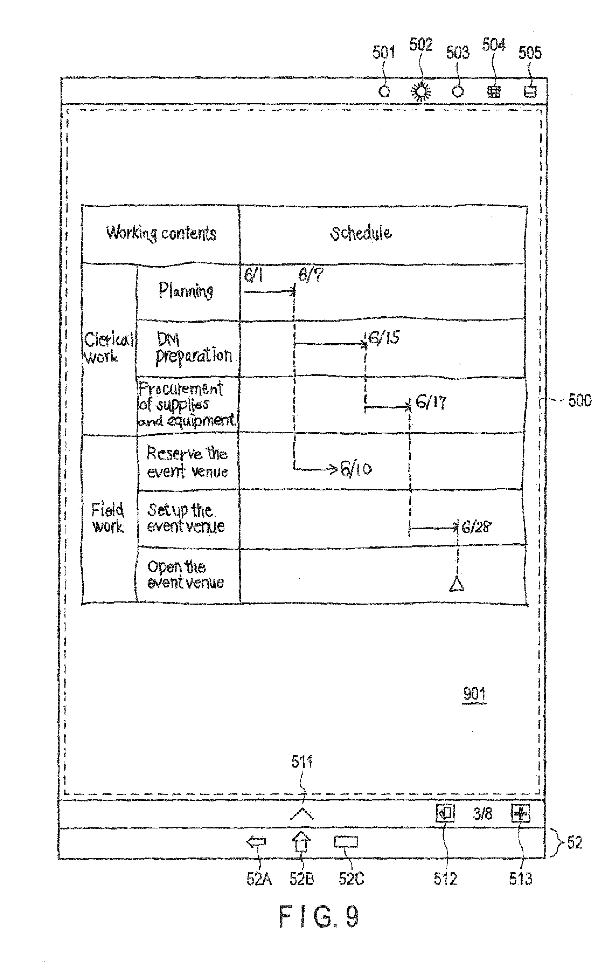

The handwritten note application program 202 may detect various gestures performed by a user on a note preview screen. For example, the handwritten note application program 202 changes a page to be displayed at the top to any page (page feeding or page returning) in response to detection of a gesture. Also, the handwritten note application program 202 selects the top page and displays the page editing screen shown in FIG. 9 instead of the note preview screen in response to detection of a gesture (for example, tap gesture) performed on the top page, the stylus icon 771, or the edit button 82D.

The page editing screen of FIG. 9 is a screen configured to create a new page (handwritten page) and to browse and edit an existing page. If the page 901 on the note preview screen of FIG. 8 is selected, a content of the page 901 is displayed on the page editing screen, as shown in FIG. 9.

On the page editing screen, a rectangular area 500 surrounded by broken lines is a handwritten input area in which handwritten input may be performed. In the handwritten input area 500, an input event from the digitizer 17C is used for displaying (writing) a hand-written stroke, but is not used as an event for indicating a gesture such as a tap. On the other hand, on the page editing screen, the input event from the digitizer 17C may be used also as an event for indicating a gesture such as a tap in an area other than the handwritten input area 500.

An input event from the touchpanel 17B is not used for displaying (writing) a hand-written stroke, but is used as an event for indicating a gesture such as a tap and a swipe.

A quick selection menu including three types of pens 501 to 503 pre-registered by a user, a range selection pen 504 and an eraser pen 505 is further displayed on the page editing screen. Suppose a black pen 501, a red pen 502 and a marker 503 are pre-registered by a user. The user may switch a type of pens to be used by tapping a pen (button) in the quick selection menu by the stylus 100 or a finger. For example, if the handwritten input operation using the stylus 100 is performed on the page editing screen in a state where the black pen 501 is selected by a tap gesture performed by a user using the stylus 100 or a finger, the handwritten note application program 202 displays a black stroke (path) on the page editing screen in accordance with movement of the stylus 100.

The above-described three types of pens in the quick selection menu may be switched by the operation of a side button of the stylus 100. Combinations of a color, a thickness (width), etc., of a frequently-used pen may be set for each of the above-described three types of pens in the quick selection menu.

A menu button 511, a page returning button 512 and a page feeding button 513 are further displayed on the page editing screen. The menu button 511 is a button for displaying a menu.

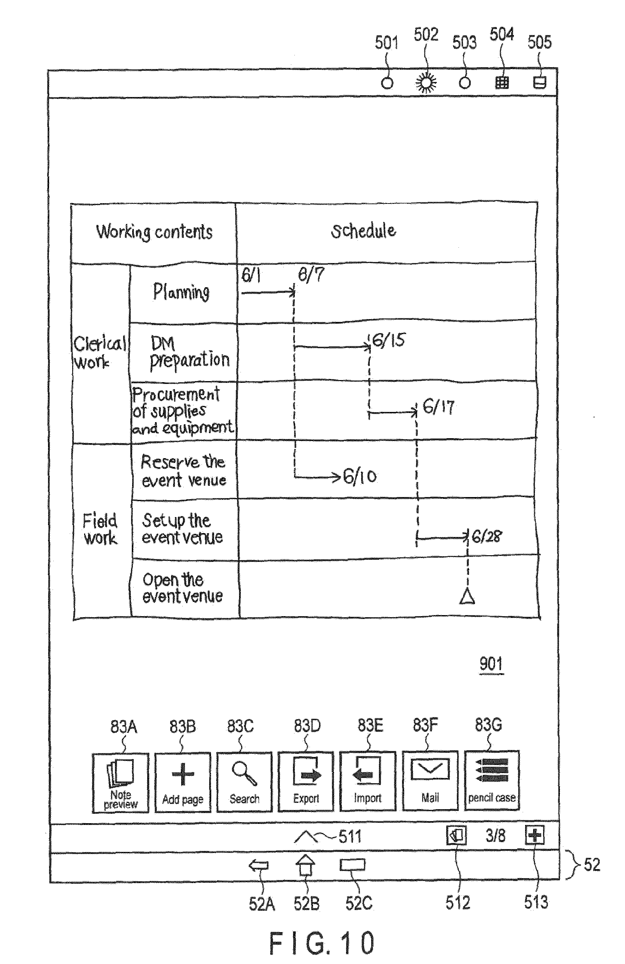

FIG. 10 illustrates a group of software buttons displayed on the page editing screen as a menu by an operation of the menu button 511. The menu includes a note preview button 83A, an add page button 83B, a search button 83C, an export button 83D, an import button 83E, an e-mail button 83F and a pen case button 83G.

The note preview button 83A is a button for returning to the note preview screen. The add page button 83B is a button for adding a new page. The search button 83C is a button for opening a search screen. The export button 83D is a button for displaying a submenu for export. The import button 83E is a button for displaying a submenu for import. The e-mail button 83F is a button for starting processing of converting a handwritten page displayed on the page editing screen into text and of transmitting it by an e-mail. The pen case button 83G is a button for calling up a pen setting screen on which a color (color of a written lirie), a thickness (width) (thickness [width] of a written line), etc., of each of the three types of pens in the quick selection menu may be changed.

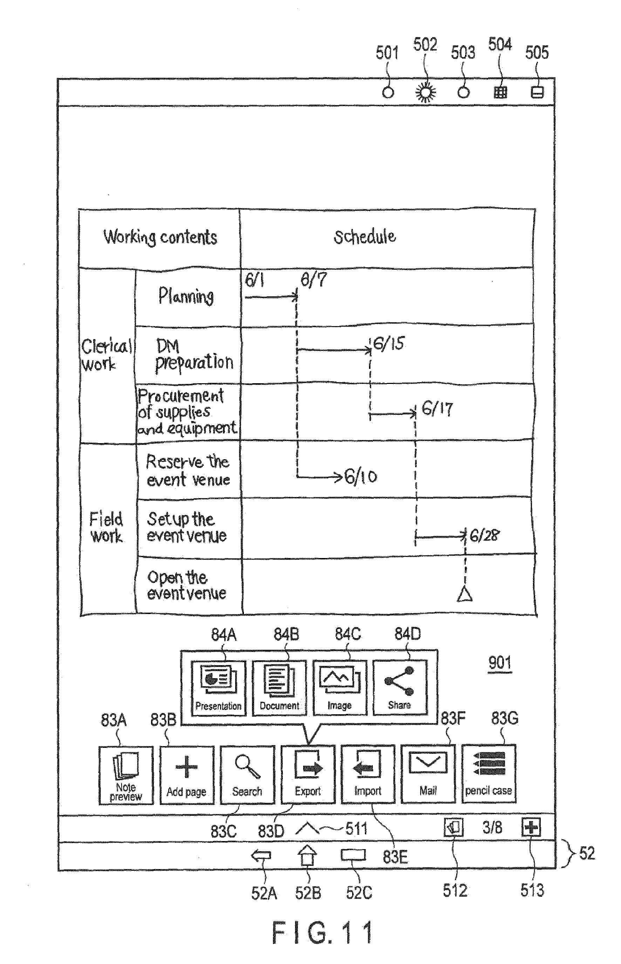

Also, FIG. 11 illustrates a group of software buttons further displayed on the page editing screen as a submenu by an operation of the export button 83D. The submenu includes a presentation button 84A, a document button 84B, an image button 84C and a share button 84D.

The presentation button 84A is a button for starting processing of recognizing a handwritten page displayed on the page editing screen and of converting it into a presentation file. The document button 84B is a button for starting processing of recognizing a handwritten page displayed on the page editing screen and of converting it into an electronic document file. The image button 84C is a button for starting processing of converting a handwritten page displayed on the page editing screen into an image file. The share button 84D is a button for starting processing of converting a handwritten page displayed on the page editing screen into an image file and of sharing it with other application programs.

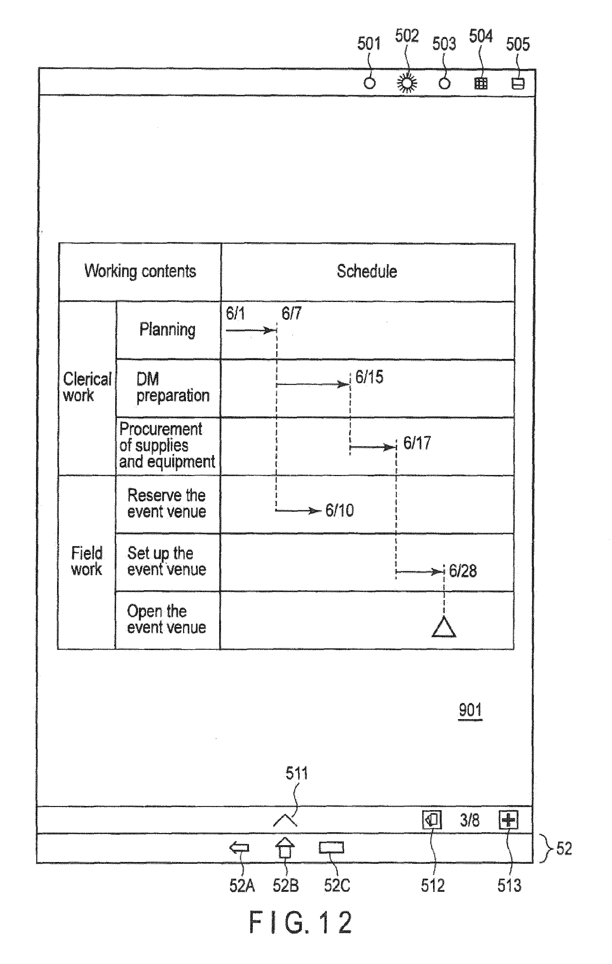

FIG. 12 illustrates a screen on which the handwritten page on the page editing screen shown in FIG. 9 is shaped and displayed by an operation of the presentation button 84A.

As described above, when the presentation button 84A is operated, the handwritten note application program 202 starts the processing of recognizing the handwritten page displayed on the page editing screen and of converting it into the presentation file. As a result, each character, each figure and each table formed by strokes on the handwritten page on the page editing screen shown in FIG. 9 are shaped and displayed using a font of a character code corresponding to each character, a figure object corresponding to each figure and a table object corresponding to each table (which are recognition results), as shown in FIG. 12.

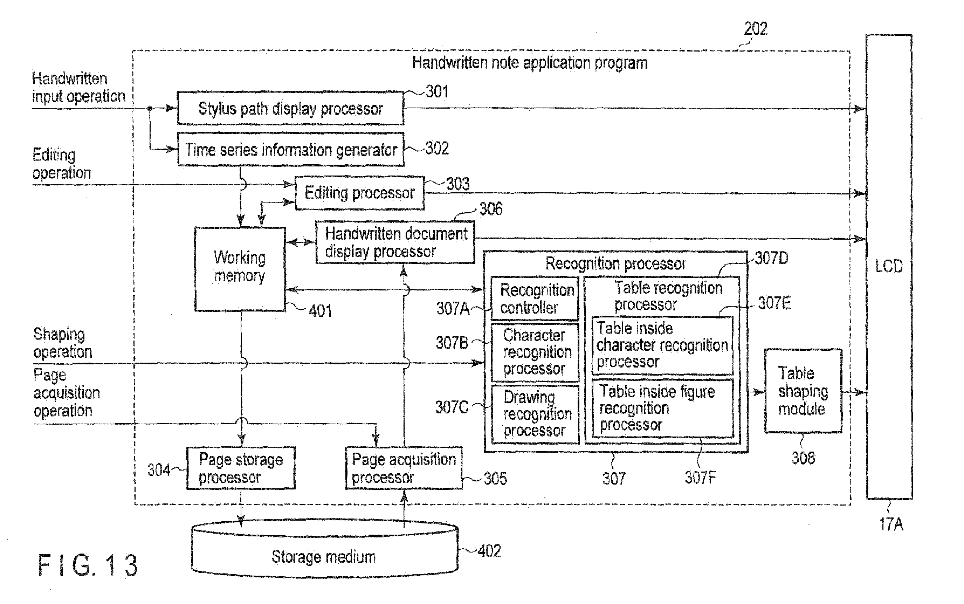

Next, a function configuration of the handwritten note application program 202 will be described with reference to FIG. 13.

The handwritten note application program 202 includes a stylus path display processor 301, a time series information generator 302, an editing processor 303, a page storage processor 304, a page acquisition processor 305, a handwritten document display processor 306, a recognition processor 307, a table shaping module 308, a working memory 401, etc. The recognition processor 307 includes a recognition controller 307A, a character recognition processor 307B, a drawing recognition processor 307C and a table recognition processor 307D. Furthermore, the table recognition processor 307D includes the table inside character recognition processor 307E and the table inside figure recognition processor 307F.

The handwritten note application program 202 uses stroke data input by means of the touchscreen display 17 to perform creation, display, editing, etc., of the handwritten document. The touchscreen display 17 is configured to detect an occurrence of an event such as touch, movement (slide), release, etc. The touch event is an event indicating that an external object is in contact with a screen. The movement (slide) event is an event indicating that a contact position moves while the external object is in contact with the screen. The release event is an event indicating that the external object is released from the screen.

The stylus path display processor 301 and the time series information generator 302 receive the touch or movement (slide) event generated by the touchscreen display 17, and thereby detect a handwritten input operation. Coordinates of the contact position are included in the touch event. Coordinates of the contact position of a movement destination are included also in the movement (slide) event. Thus, the stylus path display processor 301 and the time series information generator 302 may receive a coordinate string corresponding to a path of movement of the contact position from the touchscreen display 17.

The stylus path display processor 301 receives a coordinate string from the touchscreen display 17, and displays a path of each stroke handwritten by the handwritten input operation by means of the stylus 100, etc., based on the coordinate string on a screen of the LCD 17A in the touchscreen display 17. The path of the stylus 100 when the stylus 100 is in contact with the screen, that is, the path of each stroke is written on the screen of the LCD 17A by the stylus path display processor 301.

The time series information generator 302 receives the above-described coordinate string output from the touchscreen display 17, and generates, based on the coordinate string, the above-described time series information including a structure as described in detail in FIG. 4. In this case, the time series information, that is, the coordinates and time stamp information corresponding to each point of the stroke may be temporarily stored in the working memory 401.

The editing processor 303 performs processing for editing a handwritten page currently being displayed. That is, the editing processor 303 performs editing processing for deleting or moving at least one stroke in a plurality of strokes displayed in accordance with an editing operation performed on the touchscreen display 17 by a user. Furthermore, the editing processor 303 updates the time series information to reflect the result of the editing processing in the time series information being displayed.

The page storage processor 304 stores the generated time series information in a storage medium 402 as a handwritten document (handwritten page). The storage medium 402 may be any of a storage device in the tablet computer 10, a storage device in the personal computer 1 and the storage device 2A of the server 2, as described above.

The page acquisition processor 305 reads any already-stored time series information from the storage medium 402. The read time series information is transmitted to the handwritten document display processor 306. The handwritten document display processor 306 analyzes the time series information, and displays a path of each stroke indicated by the time series information on a screen as a handwritten page based on the analysis result.

The recognition processor 307 performs recognition processing such as handwritten character recognition, hand-written figure recognition and hand-written table recognition on the time series information (handwritten page) being displayed. The recognition processing may be used to convert the handwritten page into application data including a structure in which a paint-system application program, etc., may be handled.

The recognition controller 307A is a module configured to control three recognition modules of the character recognition processor 307B, the drawing recognition processor 307C and the table precognition processor 307D.

The character recognition processor 307B performs character recognition of each of a plurality of blocks (handwriting blocks) obtained by grouping a plurality of sets of stroke data indicated by the time series information to be recognized, and converts each of the handwritten characters in the plurality of blocks into a character code. In the grouping processing, the plurality of sets of stroke data indicated by the time series information to be recognized are grouped in order for the stroke data corresponding to each of strokes which are located adjacent to each other and continuously handwritten to be classified into the same block. That is, in the character recognition processor 307B, the character recognition of each of a plurality of blocks obtained by performing the grouping processing is performed, and a handwritten character or a handwritten character string consisting of a plurality of handwritten characters in the plurality of blocks may be converted into a character code.

The drawing recognition processor 307C performs figure recognition processing for converting block to be processed in a plurality of blocks obtained by grouping the plurality of sets of stroke data indicated by the time series information to be recognized as described above into one of a plurality of figure objects. A hand-written figure included in a handwritten document (handwritten page) is converted into a figure object which may be handled by a paint-system application program such as PowerPoint (registered trademark). The drawing recognition processor 307C pre-holds figure information indicating a feature of, for example, each of a plurality of figure objects, and calculates a degree of similarity between a hand-written figure and each of the plurality of figure objects. Then, the hand-written figure is converted into a figure object including the highest degree of similarity concerning the hand-written figure.

To calculate the degree of similarity, the hand-written figure may be rotated, enlarged or reduced as necessary, and the degree of similarity between the rotated, enlarged or reduced hand-written figure and each of the plurality of figure objects is obtained. Then, the figure object including the highest degree of similarity concerning the hand-written figure is selected, and the selected figure object is transformed based on the content of the rotating, enlarging or reducing processing performed on the hand-written figure. The transformed figure object is displayed instead of the hand-written figure.

In the above-described calculation of the similarity, each of path information of a stroke of the hand-written figure and each of path information of figure object are handled as a set of vectors, and the degree of similarity may be calculated by comparing the sets of vectors. This allows the hand-written figure to be easily converted into a paint-system document (application data) such as PowerPoint.

The table recognition processor 307D recognizes whether or not a block to be processed in a plurality of blocks obtained by grouping a plurality of sets of stroke data indicated by the time series information to be recognized as described above is in a form of a table including a combination of some linear paths. That is, the table recognition processor 307D detects the combination of horizontal and vertical lines on the handwritten page, and recognizes that the combination is in a state of a table.

If it is recognized by the table recognition processor 307D that a predetermined block to be processed is tabular, the table inside character recognition processor 307E performs character recognition of each of a plurality of blocks obtained by further grouping a plurality of sets of stroke data in the block to be processed as described above (that is, a character string including at least one character or symbol is recognized). This allows the table inside character recognition processor 307E to obtain a character code of a handwritten character or a handwritten character string consisting of a plurality of handwritten characters in the plurality of blocks.

If it is recognized by the table recognition processor 307D that a predetermined block to be processed is tabular, the table inside figure recognition processor 307F performs figure recognition of each of a plurality of blocks obtained by further grouping a plurality of sets of stroke data in the block to be processed as described above. This allows the table inside figure recognition processor 307F to obtain a figure object similar to the hand-written figure in the plurality of blocks.

It should be noted that an order in which character recognition processing, figure recognition processing and table recognition processing are performed may be any order. For example, processing for dividing all blocks into tabular blocks and non-tabular blocks may be performed as preprocessing of the character recognition processing and the figure recognition processing. Accordingly, the blocks determined to be tabular may be excluded from the processing target of the character recognition processor 307B and the drawing recognition processor 307C, and thus a recognition rate of each of the character recognition processing and the figure recognition processing may be increased.

The table shaping module 308 converts a block to be processed which is recognized to be tabular by the table recognition processor 307D into a table object including the same number of horizontal and vertical elements (cell regions) as that of horizontal and vertical elements of the recognized tabular form. That is, the hand-drafted table included in the handwritten document (handwritten page) is converted into a table object which may be handled by a spreadsheet application program such as Excel (registered trademark).

If only one handwritten character or only one handwritten character string is included in one of a plurality of cell regions of the table object (that is, if an object is recognized), the table shaping module 308 inputs a character code of a handwritten character or a handwritten character string included in the cell region obtained by the table inside character recognition processor 307E into the cell region. A value of a cell on the LCD 17A using a recognition result of an object is displayed. That is, the table shaping module 308 associates the handwritten character or handwritten character string with the cell region, if only one handwritten character or only one handwritten character string is included in one of the plurality of cell regions of the table object.

If at least two handwritten characters or at least two handwritten character strings are included in one of a plurality of cell regions of a table object (that is, at least two objects are recognized), the table shaping module 308 inputs each of character codes of the handwritten character or handwritten character string included in the cell region obtained by the table inside character recognition processor 307E into a text box which is a type of figure object (that is, at least two objects are displayed on the LCD 17A as an object different from the table object). This allows the table shaping module 308 to obtain text boxes of the same number as that of handwritten characters or handwritten character strings included in the cell region. Then, the table shaping module 308 arranges the obtained text boxes as an object of the handwritten document (handwritten page). That is, if at least two handwritten characters or at least two handwritten character strings are included in one of the plurality of cell regions of the table object, the table shaping module 308 does not associate the handwritten characters or the handwritten character strings and the cell region.

If at least one hand-written figure is included in one of a plurality of cell regions of a table object, the table shaping module 308 arranges a figure object similar to a hand-written figure included in a cell region obtained by the table inside figure recognition processor 307F as an object of the handwritten document (handwritten page). That is, if at least one hand-written figure is included in one of the plurality of cell regions of the table object, the table shaping module 308 does not associate the at least one hand-written figure with the cell region.

If a hand-written figure and one of a handwritten character and a handwritten character string are included in one of a plurality of cell regions of a table object, the table shaping module 308 inputs a character code of the handwritten character or handwritten character string included in the cell region obtained by the table inside character recognition processor 307F into a text box which is a type of figure object. This allows the table shaping module 308 to obtain a text box in which the character code of the handwritten character or handwritten character string included in the cell region is input. Then, the table shaping module 308 arranges the obtained text box and a figure object similar to the hand-written figure included in the cell region obtained by the table inside figure recognition processor 307F as an object of the handwritten document (handwritten page). That is, if the handwritten character or handwritten character string and the hand-written figure are included in one of the cell regions of the table object, the table shaping module 308 does not associate the handwritten character string (or handwritten character) and hand-written figure with the cell region.

After finishing performing the table shaping processing as described above, the table shaping module 308 displays a shaped handwritten document (handwritten page) on a screen of the LCD 17A.

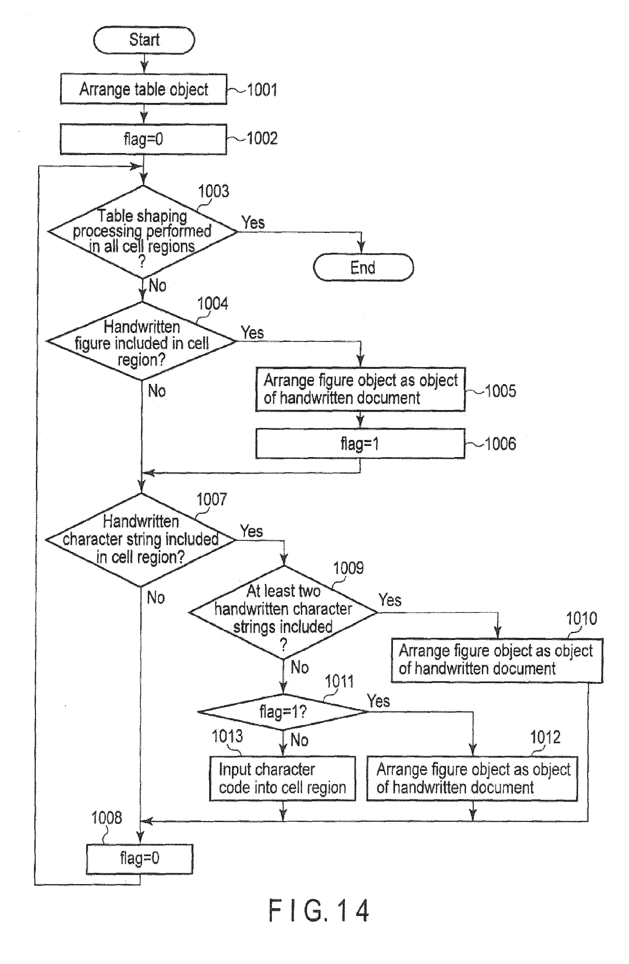

Next, procedures of table shaping processing performed by the table shaping module 308 of the handwritten note application program 202 will be described with reference to the flowchart of FIG. 14. Suppose recognition processing is performed on a predetermined handwritten page by the recognition processor 307, and, as a result, a block to be processed which is recognized to be tabular is present.

First, the table shaping module 308 converts the block to be processed which is recognized to be tabular by the table recognition processor 307D in the recognition processor 307 into a table object including cell regions of the same number as that of the recognized tabular horizontal and vertical elements (block 1001). Then, the table shaping module 308 sets 0 in a flag to indicate that a figure object is not included in each of a plurality of cell regions of the table object (block 1002).

Then, the table shaping module 308 determines whether table shaping processing has been performed in all the cell regions of the table object or not (block 1003). If it is determined that the table shaping processing has been performed on all the cell regions (YES in block 1003), the table shaping processing by the table shaping module 308 ends.

If it is determined that the table shaping processing has not been performed on all the cell regions (NO in block 1003), the table shaping module 308 performs the table shaping processing on the cell region in which the table shaping processing has not been performed yet. The table shaping module 308 determines whether a hand-written figure is included in a cell region of a table shaping processing target or not using the recognition processing result by the table inside figure recognition processor 307F (block 1004). If it is not determined that a hand-written figure is not included in the cell region of the table shaping processing target (NO in block 1004), the table shaping module 306 performs the processing of block 1007 to be described later.

If it is determined that a hand-written figure is included in the cell region of the table shaping processing target (YES in block 1004), the table shaping module 308 converts a figure object similar to the hand-written figure included in the cell region obtained by the table inside figure recognition processor 307F into an object of the handwritten document (block 1005). Then, the table shaping module 308 sets 1 in the flag to indicate that a figure object is included in the cell region of the table shaping processing target (block 1006).

Next, the table shaping module 308 determines whether a handwritten character string (handwritten character) is included in the cell region of the table shaping processing target or not using the recognition processing result by the table inside character recognition processor 307E (block 1007). If it is determined that a handwritten character string is not included in the cell region of the table shaping processing target (NO in block 1007), the table shaping module 308 re-performs the processing of block 1003 after setting 0 in the flag of the cell region of the table shaping processing target (block 1008).

If it is determined that a handwritten character string is included in the cell region of the table shaping processing target (YES in block 1007), the table shaping module 308 determines whether at least two handwritten character strings are included in the cell region of the table shaping processing target or not using the recognition processing result by the table inside character recognition processor 307E (block 1009). If at least two handwritten character strings are included in the cell region of the table shaping processing target (YES in block 1009), the table shaping module 308 inputs a character code of each of the at least two character strings obtained by the table inside character recognition processor 307E into a text box which is a type of figure object. Then, the table shaping module 308 performs the processing of block 1008 after converting the text box into an object of the handwritten document (block 1010).

If it is determined that at least two handwritten character strings are not included in the cell region of the table shaping processing target (NO in block 1009), the table shaping module 308 determines whether the flag of the cell region of the table shaping processing target is 1 or not (block 1011).

If it is determined that the flag of the cell region of the table shaping processing target is 1 (YES in block 1011), the table shaping module 308 inputs the character code of the character string obtained by the table inside character recognition processor 307E into a text box which is a type of figure object. Then, after converting the text box into an object of the handwritten document (block 1012), the table shaping module 308 performs the processing of block 1008.

If it is determined that the flag of the cell region of the table shaping processing target is not 1 (NO in block 1011), the table shaping module 308 performs the processing of block 1008 after inputting the character code of the character string obtained by the table inside character recognition processor 307E into the cell region of the table shaping processing target (block 1013).

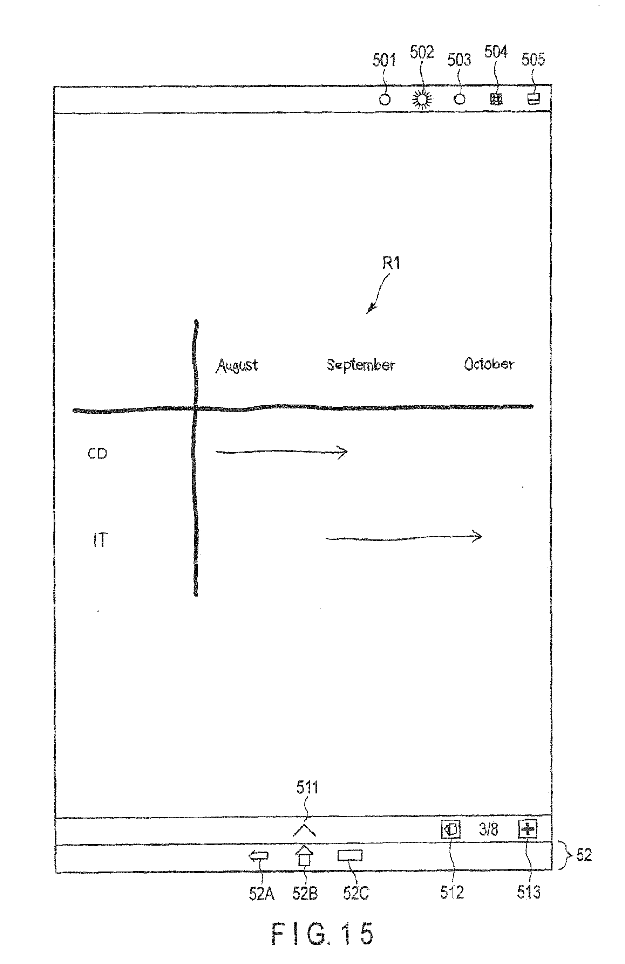

It should be noted that if at least two handwritten character strings are included in the cell region of the table shaping processing target, the character code of each handwritten character string is input into the text box, and the table shaping processing for converting the text box into an object of the handwritten document is performed in this embodiment in a table shaping way. However, if at least two handwritten character strings are included in the cell region of the table shaping processing target, the table shaping processing may be performed in a different way. This will be hereinafter described in detail with reference to FIGS. 15 to 17.

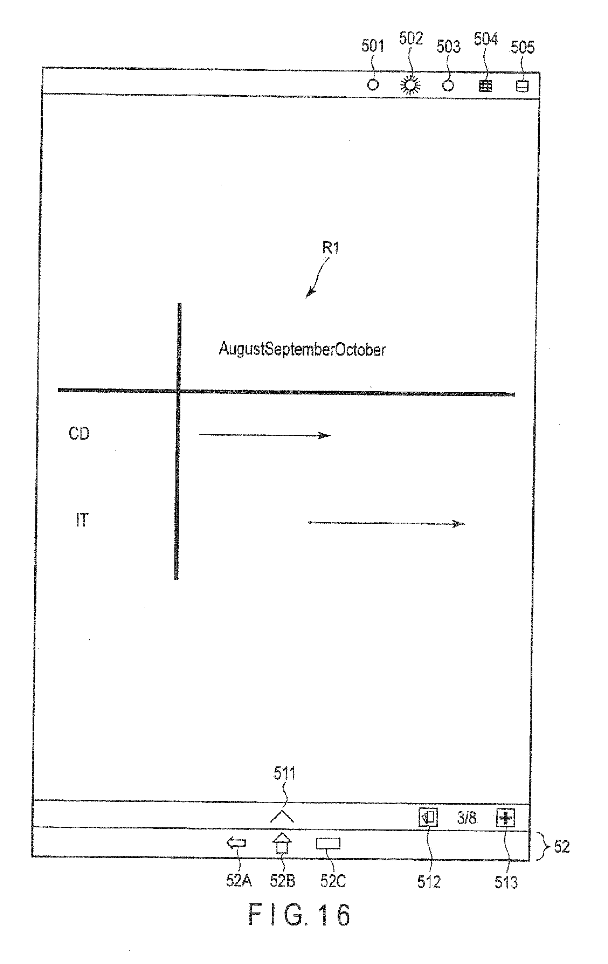

FIG. 15 illustrates a screen on which a hand-drafted table before the table shaping processing is displayed, and FIG. 16 illustrates a screen on which a table after normal table shaping processing is displayed. As shown in FIG. 15, at least two handwritten character strings, "August," "September" and "October" are included in cell region R1. When the normal table shaping processing is performed on cell region R1, each of the character codes of "August," "September" and "October" obtained by the character recognition is input into cell region R1. Thus, as shown in FIG. 16, inconvenience of all character strings being connected and displayed occurs in the table after the table shaping processing. Thus, in this embodiment, to maintain the appearance before the table shaping processing, if at least two handwritten character strings are included in the cell region of the table shaping processing target, the text box into which the character codes of the handwritten character strings are input is converted into an object of the handwritten document.

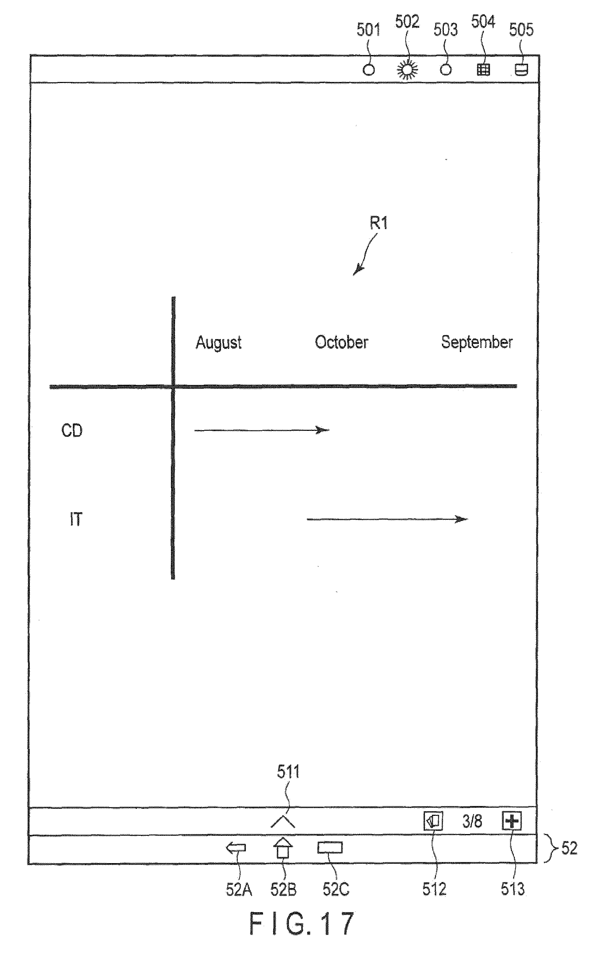

However, if only at least two handwritten character strings are included in the cell region of the table shaping processing target, the appearance before the table shaping processing may also be maintained by table shaping processing based on a different method. Specifically, if only at least two handwritten character strings are included in the cell region of the table shaping processing target (that is, if a first character string including at least one character or symbol and a second character string including at least one character or symbol are recognized), the table shaping module 308 determines whether predetermined space (for example, space for one full-size character) is present between at least two handwritten character strings or not using the recognition processing result by the table inside character recognition processor 307E. Then, it is determined that the predetermined space is present between at least two handwritten character strings, the table shaping module 308 inputs the predetermined space as a character code of a blank (space) along with the character code obtained by the table inside character recognition processor 307E into cell region R1. The table shaping module 308 displays a value of a cell on the LCD 17A using an object including the first character string, the second character string and information concerning an interval between the first character string and the second character string. That is, the table shaping module 308 inputs character codes into cell region R1 in such an order as a character code of "August," a blank character code, a character code of "September," a blank character code and a character code of "October." This allows the table in which the appearance before the table shaping processing is maintained to be displayed also in a method different from the method in which the above-described text box is arranged as an object of the handwritten document as shown in FIG. 17.

According to the above-described embodiment, if at least two handwritten character strings, at least one handwritten character string and at least one hand-written figure, or at least one hand-written figure is included in the cell region of the table shaping processing target, the tablet computer 10 includes the handwritten note application program 202 which may convert the handwritten character string and the hand-written figure in a cell region as a figure object. Thus, display that a user will not find awkward is enabled.

It should be noted that since the processing of this embodiment can be realized by a computer program, an advantage similar to that of this embodiment can be easily achieved merely by installing the computer program in a computer and executing it by use of a computer-readable storage medium in which the computer program is stored.

## Claims

1. An electronic apparatus **characterized by** comprising:
a receiver (302) configured to receive information of a handwritten document comprising a hand-written table, the hand-written table comprising a plurality of cells, a first cell comprising at least one first object; and
a display controller (308) configured to display a cell value of a table using a recognition result of one first object if an area of the first cell comprises one first object, and
to display a recognition result of at least one first object as an object different from a table if an area of the first cell comprises at least two first objects.

2. The electronic apparatus of Claim 1, **characterized in that** one first object or the at least two first objects are recognized based on stroke data of the handwritten document.

3. The electronic apparatus of Claim 1, **characterized by** further comprising a recognition controller (307) configured to recognize the table, one first object or the at least two first objects.

4. The electronic apparatus of Claim 1, **characterized in that** one first object comprise a figure or a first character string, the first character string comprising at least one character or symbol, and the at least two first objects comprise a figure or a second character string, the second character string comprising at least one character or symbol.

5. The electronic apparatus of Claim 1, **characterized in that** the display controller (308) is configured to display the value of the cell using a first character string including at least one character or symbol, a second character string including at least one character or symbol and information concerning an interval between the first character string and the second character string when the first character string and the second character string are in the area of the first cell.

6. A method of displaying a handwritten document by an electronic apparatus **characterized by** comprising:
receiving information of a handwritten document comprising a hand-written table, the hand-written table comprising a plurality of cells, a first cell comprising at least one first object;
displaying a cell value of a table using a recognition result of one first object if an area of the first cell comprises one first object; and
displaying a recognition result of at least one first object as an object different from a table if an area of the first cell comprises at least two first objects.

7. The method of Claim 6, **characterized in that** one first object or the at least two first objects are recognized based on stroke data of the handwritten document.

8. The method of Claim 6, **characterized by** further comprising recognizing the table, the one first object or the at least two first objects.

9. The method of Claim 6, **characterized in that** one first object comprise a figure or a first character string, the first character string comprising at least one character or symbol, and the at least two first objects comprise a figure or a second character string, the second character string comprising at least one character or symbol.

10. The method of Claim 6, **characterized in that** the displaying comprises displaying the value of the cell using a first character string including at least one character or symbol, a second character string including at least one character or symbol and information concerning an interval between the first character string and the second character string when the first character string and the second character string are in the area of the first cell.

11. A non-transitory computer-readable storage medium storing computer-executable instructions that, when executed, cause a computer to:
a receiver (302) configured to receive information of a handwritten document **characterized by** comprising a hand-written table, the hand-written table comprising a plurality of cells, a first cell comprising at least one first object; and
a display controller (308) configured to display a cell value of a table using a recognition result of one first object if an area of the first cell comprises one first object, and
to display a recognition result of at least one first object as an object different from a table if an area of the first cell comprises at least two first objects.

12. The storage medium of Claim 11, **characterized in that** one first object or the at least two first objects are recognized based on stroke data of the handwritten document.

13. The storage medium of Claim 11, **characterized by** further causing the computer to operate as a recognition controller (307) configured to recognize the table, one first object or the at least two first objects.

14. The storage medium of Claim 11, **characterized in that** one first object comprise a figure or a first character string, the first character string comprising at least one character or symbol, and the at least two first objects comprise a figure or a second character string, the second character string comprising at least one character or symbol.

15. The storage medium of Claim 11, **characterized in that** the display controller (308) is configured to display the value of the cell using a first character string including at least one character or symbol, a second character string including at least one character or symbol and information concerning an interval between the first character string and the second character string when the first character string and the second character string are in the area of the first cell.
